# FASCICULE DE BREVET EUROPEEN

(11) **EP 3 317 041 B1**
(45) Date de publication et mention de la délivrance du brevet: **14.08.2019**
(21) Numéro de dépôt: 16741669.2
(22) Date de dépôt: 30.06.2016
(51) Int. Cl.: B23K 26/22, B23K 26/32, C22C 21/04, B23K 26/244, B23K 101/00, B23K 101/18, B23K 103/10

(54) **PROCEDE DE SOUDAGE PAR LASER SANS FIL D'APPORT DE SEMI PRODUITS MONOLITHIQUES EN ALLIAGE D'ALUMINIUM ; COMPOSANT DE STRUCTURE ET FLANC RABOUTE CORRESPONDANTS**
VERFAHREN ZUM LASERSCHWEISSEN VON MONOLITHISCHEM HALBZEUG AUS EINER ALUMINIUMLEGIERUNG OHNE FÜLLDRAHT SOWIE ENTSPRECHENDES BAUTEIL UND MASSGESCHNEIDERTER ROHLING
METHOD FOR THE LASER WELDING OF MONOLITHIC SEMI-FINISHED PRODUCTS MADE FROM ALUMINIUM ALLOY, WITHOUT FILLER WIRE, AND CORRESPONDING STRUCTURAL COMPONENT AND TAILORED BLANK

(30) Priorité: 02.07.2015 FR 1556273
(43) Date de publication de la demande: 09.05.2018
(73) Titulaire: Constellium Neuf-Brisach, 68600 Biesheim (FR)
(72) Inventeur: MASSE, Jean-Philippe, 38000 Grenoble (FR); SHAHANI, Ravi, 38340 Voreppe (FR)
(74) Mandataire: Constellium - Propriété Industrielle
(86) Numéro de dépôt international: PCT/FR2016/051648
(87) Numéro de publication internationale: WO 2017/001790

(56) Documents cités:
- EP-A2- 1 380 380
- JP-A- 2006 104 580
- US-A1- 2005 028 894
- US-A1- 2005 100 473
- US-A1- 2005 155 676

## Description

### Domaine de l'invention

L'invention concerne le domaine des pièces mises en forme par emboutissage ou filage pour l'automobile, en particulier les pièces assemblées par soudage laser à distance sans fil d'apport, ou « Remote laser welding ». Plus particulièrement il s'agit de pièces en alliage de la famille AA6xxx selon la désignation de l' « Aluminum Association », additionnées d'éléments durcissants et destinées à la fabrication par emboutissage de pièces de doublure, de structure ou de renfort de la caisse en blanc des véhicules automobiles.

Plus particulièrement, la présente invention concerne un procédé de soudage de demi-produits monolithiques en alliage d'aluminium par laser sans fil d'apport (voir la revendication 1), un composant de structure, de caisse en blanc, de peau ou d'ouvrant de véhicule automobile (voir la revendication 13) et d'un flanc rabouté (voir la revendication 14).

### Etat de la technique

En préambule, tous les alliages d'aluminium dont il est question dans ce qui suit sont désignés, sauf indication contraire, selon les désignations définies par l'« Aluminum Association » dans les « Registration Record Sériés » qu'elle publie régulièrement. Sauf mention contraire, les indications concernant la composition chimique des alliages sont exprimées comme un pourcentage en poids basé sur le poids total de l'alliage ; « ppm » signifie partie par million en poids.

Les définitions des états métallurgiques sont indiquées dans la norme européenne EN 515.

Les caractéristiques mécaniques statiques en traction, en d'autres termes la résistance à la rupture Rm, la limite d'élasticité conventionnelle à 0,2 % d'allongement Rp0,2, et l'allongement à la rupture A%, sont déterminées par un essai de traction selon la norme NF EN ISO 6892-1.

Les alliages d'aluminium sont utilisés de manière croissante dans la construction des véhicules automobiles car leur utilisation permet de réduire le poids des véhicules et ainsi diminuer la consommation de carburant et les rejets de gaz à effets de serre.

Les tôles en alliage d'aluminium sont utilisées notamment pour la fabrication de nombreuses pièces de la « caisse en blanc » parmi lesquelles on distingue : les pièces de peau de carrosserie (ou panneaux extérieurs de carrosserie) comme les ailes avant, le toit ou pavillon, les peaux de capot, de coffre ou de porte ; les pièces de doublure comme par exemple les doublures de porte, d'aile, de hayon ou de capot ; et enfin les pièces de structure, comme par exemple les longerons, les tabliers, les planchers de charges et les pieds avant, milieu et arrière.

De nombreuses pièces de peau et de doublure sont déjà réalisées en tôles d'alliages d'aluminium.

Pour ce type d'applications, un ensemble de propriétés, parfois antagonistes est requis telles que :
- une formabilité élevée à l'état de livraison, état T4, en particulier pour les opérations d'emboutissage,
- une limite d'élasticité contrôlée à l'état de livraison de la tôle pour maîtriser le retour élastique lors de la mise en forme,
- une résistance mécanique élevée après cataphorèse et cuisson des peintures pour obtenir une bonne résistance mécanique en service tout en minimisant le poids de la pièce,
- une bonne capacité à l'absorption d'énergie en cas de choc,
- un bon comportement dans les divers procédés d'assemblage utilisés en carrosserie automobile tels que le soudage par points, le soudage laser, le collage, voire le clinchage ou le rivetage,
- une bonne résistance à la corrosion, notamment la corrosion intergranulaire, la corrosion sous contrainte et la corrosion filiforme de la pièce finie,
- une compatibilité avec les exigences du recyclage des déchets de fabrication ou des véhicules recyclés,
- un coût acceptable pour une production en grande série.

Il n'existe pas dans l'état de la technique de solutions consistant en des tôles monolithiques qui puissent être assemblées par soudage laser à distance sans fil d'apport et qui présentent les propriétés de caractéristiques mécaniques, formabilité et corrosion, similaires aux tôles en alliage d'aluminium couramment utilisées dans l'industrie automobile.

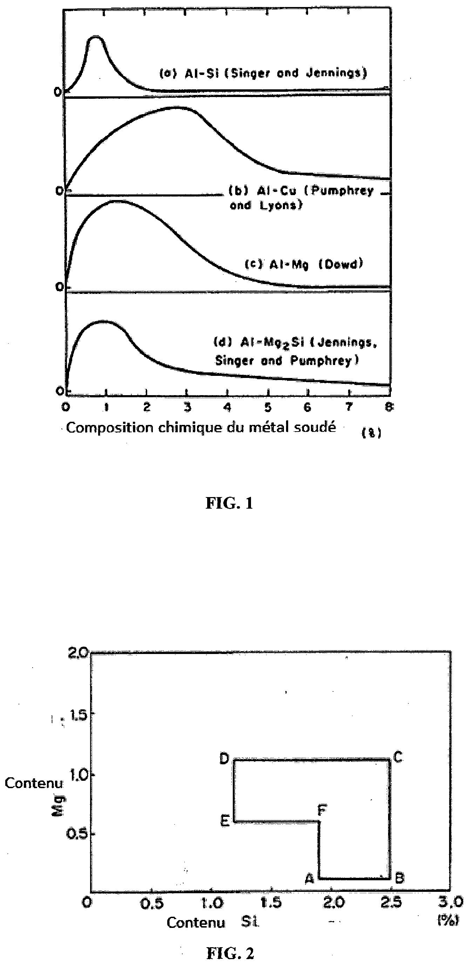

Par ailleurs les solutions connues pour notamment diminuer la sensibilité à la fissuration des alliages d'aluminium et qui permettent plus généralement d'en améliorer la soudabilité sont l'augmentation de la teneur en silicium au-delà de 2 %, en magnésium au-delà de 5 %, et en cuivre au-delà de 6 % (voir figure 1).

Dans le cas des alliages de la série AA6XXX, un fil d'apport est utilisé pour assurer une bonne résistance à la fissuration lors du soudage laser ; celui-ci est constitué d'un alliage de la série AA4XXX à haute teneur en silicium (12 % par exemple) ou un alliage de la série AA5XXX. Il est aussi connu que l'ajout d'éléments tels que le Titane et le Zirconium affine la structure de solidification et de ce fait diminue la sensibilité à la fissuration lors du soudage laser, comme le rapporte « Current issues and problems in laser welding of automotive aluminum alloys », H. Zhao, D. R. White, and T. DebRoy, International Materials Reviews, Volume 44, Issue 6 (01 June 1999), pp. 238-266, dont est extraite la figure 1.

Même si, comme dit plus haut, aucune solution de tôle monolithique, c'est-à-dire non composite, composée de deux alliages co-laminés ou obtenue par coulée « bi-alliages », n'est connue de l'état de la technique pour l'assemblage par soudage laser dans l'automobile, une tôle monolithique a été développée par « Sky » pour application au soudage à l'arc selon les procédés TIG et MIG et a fait l'objet de la demande US4897124. Le domaine de composition de ladite tôle, défini sur la figure 2, avec une teneur en Fe comprise entre 0.05 % et 0.5 % et au moins un élément du groupe suivant : Mn à une teneur inférieure à 0.6 %, Cr à une teneur inférieure à 0.3 % et Zr également à une teneur inférieure à 0.3 %. Une soudabilité améliorée est revendiquée, tout comme la formabilité améliorée et la résistance à la corrosion.

D'autre part, un produit multicouche a été développé par « Novelis » comme le rapportent « Advanced Aluminum 5XXX and 6XXX for complex Door Inner Panels and Consideration for an Aluminum-specific Design », A. Walker, G. Florey - Novelis Switzerland SA; Bad Nauheim - Doors and Closures in Car Body Engineering 2014 et « Laser Remote Welding of Aluminum without filler », R. Brockmann (Trumpf), C. Bassi (Novelis) 2012/04/19.

Il s'agit d'un assemblage composé d'une tôle d'âme, ou coeur, en alliage « Novelis 6200 » plaqué de tôles en alliage de la famille AA4XXX (d'une teneur de 12 % en Si, légèrement inférieure à celle de l'eutectique Al-Si [voir Laser Remote Welding of Aluminum without filler ; R. Brockmann (Trumpf), C. Bassi (Novelis) 2012/04/19]) en peau. Son nom commercial est 6200RW ou « Novelis Advanz s200 RW ». Il présente une soudabilité améliorée lors du soudage laser à distance sans fil d'apport, et pas de fissure dans le joint soudé comme le précise « Laser Remote Welding of Aluminum without filler », R. Brockmann (Trumpf), C. Bassi (Novelis) 2012/04/19. Toutefois ce type de produit non monolithique n'est pas idéal en termes de coûtet recyclage.

La demande de brevet JP2006104580, représentant l'état de la technique le plus proche, divulgue une tôle en alliage d'aluminium de la série 3XXX présentant une bonne soudabilité laser pulsé, de composition, en % en poids, Si : >0,20 à 0,60, Fe : 0,25 à 0,55, Cu : 0,10 à 0,35 , Mn : 0,9 à 1,5 , Mg, 0,25 à 0,55, reste aluminium et impuretés inévitables, la valeur totale de Si, Fe, Cu et Mg étant inférieure ou égale à 1,5 % en poids. Ces tôles en alliage 3XXX ne présentent pas les caractéristiques mécaniques souhaitées.

La demande de brevet US2005/0155676 décrit des pièces de sécurité ou de structure obtenu par moulage sous pression faits dans un alliage contenant Si : 2 à 6, Mg < 0,40, Cu < 0,30, Zn < 0,30, Fe < 0,50, Ti < 0,30 au moins un élément pour réduire l'adhérence au moule tel que Mn (0,3 - 2), Cr (0,1 - 0,3) Co (0,1 - 0,3) V (0,1 à 0,3) ou Mo (0,1 - 0,4) et au moins un éléments pour modifier les eutectiques tel que Sr (50 - 500 ppm), Na (20 - 100 ppm) ou Ca (30 - 120 ppm). Ces produits moulés ne présentent pas les caractéristiques géométriques et mécaniques souhaitées

La demande de brevet JP1995109537 décrit un alliage Al-Si hypo-eutectique utilisable pour les produits moulés, extrudés et forgés qui a une composition contenant, en % en poids, Si : 3,3 - 5,5, Mg : 0,2 - 0,7, Ti : 0,01 - 0,2, B : 0,0001 - 0,01, Fe ≤ 0,2, P ≤ 0,005 et Ca ≤ 0,005 et satisfaisant le rapport P/Ca ≤ 1.0 en poids. Ces produits ne présentent pas les caractéristiques géométriques et mécaniques souhaitées

La demande de brevet US2005/0100473 décrit des alliages d'aluminium et des produits moulés contenant en % en poids, Si : 4 - 12, Cu < 0,2, Mg : 0,1 - 0,5, Ni : 0,2 - 3,0, Fe : 0,1 - 0,7, Ti : 0,15 - 0,3 et le reste aluminium et impuretés. Ces produits moulés ne présentent pas les caractéristiques géométriques et mécaniques souhaitées

### Problème posé

Les alliages d'aluminium de la série AA6XXX, largement utilisés dans l'industrie automobile, sont connus pour être très sensibles à la fissuration lors de l'assemblage par soudage laser, en particulier en provoquant des fissures critiques dans le cordon soudé.

Le problème posé est le développement d'une tôle en alliage d'aluminium ne formant pas de fissures critiques lors de l'assemblage par soudage laser à distance sans fil d'apport. Cette tôle en alliage d'aluminium, doit présenter les mêmes performances en résistance mécanique, formabilité, et corrosion, que les alliages d'aluminium utilisés couramment. Les caractéristiques mécaniques de la tôle sont de préférence les suivantes, à l'état T4 de livraison, Rp_{0,2} ≤ 160 MPa, Ag ≥ 18 %, A80 ≥ 20 %, et après cuisson des peintures (écrouissage en traction de 2% suivi de 20 min à 180°C), Rp_{0,2} ≥ 190 MPa et Rm ≥ 240 MPa.

### Objet de l'invention

L'invention a pour objet un procédé de soudage de demi-produits monolithiques en alliage d'aluminium par laser à distance sans fil d'apport tel que définit dans la revendication 1, comportant les étapes suivantes :
- Approvisionnement d'au moins deux demi-produits monolithiques en alliage d'aluminium dont l'un au moins est une tôle laminée de composition (% en poids) :
   Si : 2,5-14, de préférence 2,5-10,0 de préférence 2,7-5,0
   Fe : 0,05-0,80 de préférence 0,15-0,60
   Cu : ≤ 0,20 de préférence ≤ 0,10 voire ≤ 0.05, et même ≤ 200 ppm voire 100 ppm
   Mg : 0,05-0,8, de préférence 0,20-0,80 de préférence 0,20-0,40
   Mn : ≤ 0,70 de préférence ≤ 0,30
   Cr : ≤ 0,35
   Ti : 0,02-0,30
   Sr jusqu'à 500 ppm
   Na jusqu'à 200 ppm
   Sb jusqu'à 0,15 %,
   autres éléments < 0,05 chacun et < 0,15 au total, reste aluminium,
   avec la condition : 5.2 Fe + 1.95 Si - 0.5 Cu - Mg ≥ 7,0
- Soudage des demi-produits en alliage d'aluminium par laser à distance sans fil d'apport.

Selon un mode de réalisation préférentiel, les dits demi-produits constituent des composants de structure automobile, voire des composants de caisse en blanc automobile, incluant des composants de peau de véhicule automobile et aussi des composants d'ouvrants de véhicule automobile.

Enfin, l'objet de l'invention inclut également un composant de structure, de caisse en blanc, de peau ou d'ouvrant de véhicule automobile tel que défini dans la revendication 13, constitué de plusieurs demi-produits dont l'un au moins a une composition, et est assemblé selon un procédé, tels que définis plus haut.

Encore un objet de l'invention est un flan rabouté tel que défini dans la revendication 14, obtenu par le procédé selon l'invention.

### Description des figures

La figure 1 représente l'effet de la composition chimique du métal soudé sur la « susceptibilité relative » à la crique, ou sensibilité à la fissuration pour divers alliages binaires.
La figure 2 représente le domaine de composition revendiqué par « Sky » selon la demande US4897124.
La figure 3 illustre schématiquement une configuration typique de dispositif de soudage laser vu en coupe transversale, avec en 1 le cordon de soudure laser.
La figure 4 illustre le même dispositif de soudage laser vu de dessus avec en noir (2) les fixations ou bridages.
La figure 5 précise les dimensions en mm des outils utilisés pour déterminer la valeur du paramètre connu de l'homme du métier sous le nom de LDH (Limit Dome Height) caractéristique de l'aptitude à l'emboutissage du matériau.
La figure 6 est un schéma des échantillons utilisés pour les essais de résistance à la corrosion inter-granulaire.
La figure 7 illustre schématiquement une configuration de dispositif de soudage bout à bout pour la réalisation d'un flan rabouté.
La figure 8 illustre schématiquement le prélèvement des éprouvettes pour la mesure des propriétés mécaniques du flan rabouté, RD signifie direction de laminage.

### Description de l'invention

Le procédé selon l'invention comporte l'approvisionnement de demi-produits monolithiques en alliage d'aluminium, typiquement des tôles laminées ou des profilés extrudés. Au moins un des demi-produits est une tôle laminée. Dans un mode de réalisation de l'invention, au moins deux des deux demi-produits sont des tôles laminées. Dans un autre mode de réalisation de l'invention au moins un second demi-produit est un profilé extrudé.

Le procédé de fabrication des tôles monolithiques comporte typiquement la coulée, le réchauffage/homogénéisation, le laminage à chaud, le laminage à froid, la mise en solution et trempe.

La coulée est généralement du type semi-continu vertical de plaques suivie du scalpage, ou éventuellement du type continu.

Le réchauffage des plaques est réalisé typiquement à une température de l'ordre de 550°C pendant au moins 4 h, afin de globuliser les particules de silicium en excès lorsque sa teneur est supérieure à 1.2 %, et obtenir des particules d'aspect circulaire et réparties de manière homogène dans l'épaisseur de la tôle. Cette température est avantageusement comprise entre le solvus et le solidus de l'alliage considéré.

Après réchauffage les plaques subissent typiquement un laminage à chaud puis un laminage à froid. Le laminage à chaud n'est pas différent d'un laminage à chaud d'un alliage de la famille AA6XXX utilisé pour les renforts de porte par exemple.

La mise en solution, suivant le laminage à froid est typiquement réalisée à une température de l'ordre de 550°C, afin de recristalliser et de remettre en solution tout le Mg et le Si libre, avant la trempe. Cette température est avantageusement comprise entre le solvus et le solidus de l'alliage, tout comme pour le réchauffage.

Dans le cas où un second demi-produit est un profilé, les étapes typiques de fabrication sont similaires :
La coulée des billettes est aussi généralement du type semi-continu vertical suivi du scalpage éventuel.

Le réchauffage des billettes avant ou après leur découpe à longueur est réalisé typiquement à une température de l'ordre de 550°C. Cette température est avantageusement comprise entre le solvus et le le solidus de l'alliage considéré.

Après réchauffage les billettes sont filées avec mise en solution et trempe sur presse ou séparée.

Dans ce dernier cas, la mise en solution est typiquement réalisée à une température de l'ordre de 550°C, afin de remettre en solution tout le Mg et le Si libre, avant la trempe. Cette température est plus avantageusement comprise entre le solvus et le solidus de l'alliage tout comme pour le réchauffage.

La composition chimique de ladite tôle laminée du procédé selon l'invention est (% en poids) :
Si : 2,5-14, de préférence 2,5-10,0 de préférence 2,7-5,0
Fe : 0,05-0,80 de préférence 0,15-0,60
Cu : ≤ 0,20 de préférence ≤ 0,10 voire ≤ 0.05, et même ≤ 200 ppm voire 100 ppm
Mg : 0,05-0,8, de préférence 0,20-0,80 de préférence 0,20-0,40
Mn : ≤ 0,70 de préférence ≤ 0,30
Cr : ≤ 0,35
Ti : 0,02-0,30
Sr jusqu'à 500 ppm
Na jusqu'à 200 ppm
Sb jusqu'à 0,15 %,
autres éléments < 0,05 chacun et < 0,15 au total, reste aluminium,
avec la condition : 5.2 Fe + 1.95 Si - 0.5 Cu - Mg ≥ 7,0

Les plages de concentration imposées aux éléments constitutifs de ce type d'alliage s'expliquent par les raisons suivantes :
Si : La présence de Silicium à une teneur minimum de 2,5 % permet d'obtenir une amélioration significative de la soudabilité. Au-delà d'une teneur de 5 %, la formabilité commence à décroitre pour devenir problématique au-delà de 14% et dans certains cas au-delà de 10,0%.
Une teneur préférentielle en silicium est de 2,7 à 5,0 %.

Fe : Une teneur en Fe minimale de 0,05 % permet de manière inattendue d'améliorer la soudabilité, tandis que pour une teneur supérieure à 0,80 % la formabilité est significativement dégradée.
Une teneur préférentielle en fer est de 0,15 à 0,60 %.

Par ailleurs, la demanderesse a noté que la condition « 5,2 Fe + 1,95 Si - 0,5 Cu- Mg ≥ 7,0 » appelée dans la suite « Condition A » était particulièrement favorable à la soudabilité. Dans cette expression « Fe », « Si », « Cu » et « Mg » signifient respectivement les teneurs en Fer, Silicium, Cuivre et Magnésium exprimées en % en poids.

Cu : Au-delà d'une teneur supérieure à 0,20 % la soudabilité se dégrade nettement. De préférence la teneur en cuivre est ≤ 0,10 % voire ≤ 0.05, et même ≤ 200 voire 100 ppm

Mg : Une teneur minimale en Mg de 0,05% et de préférence de 0,20 % est nécessaire pour la formation suffisante de précipités Mg₂Si afin d'obtenir les caractéristiques mécaniques requises après cuisson des peintures. Son influence négative sur le soudage impose une limitation à une teneur maximum de 0,80 %.
Une teneur préférentielle en magnésium est de 0,20 à 0,40 %.

Cr : Sa teneur est limitée à 0,35 %.
Une addition de 0,05 % ou plus a un effet durcissant, mais au-delà de 0,35 %, le chrome forme des phases intermétalliques néfastes.
Une teneur préférentielle en chrome est de 0,05 à 0,25 %.

Mn : sa teneur est limitée à 0,70 %. Une addition de manganèse au-delà de 0,05 % peut accroître les caractéristiques mécaniques par effet de solution solide, mais au-delà de 0,70%, elle ferait très fortement décroitre la formabilité, phénomène déjà perceptible au-delà de 0 ,30 %. Une teneur préférentielle pour Mn est de 0,05 à 0,30 %. Dans un mode de réalisation de l'invention, la teneur maximale de Mn est 0,2%.

Ti : Il a été noté que cet élément avait pour effet d'affiner la structure de solidification et donc diminuer la sensibilité à la fissuration. Une teneur minimale en Ti de 0,02 % est donc nécessaire. Par contre, une teneur maximum de 0,30 % est requise pour ne pas former des phases primaires lors de la coulée verticale, qui ont un effet néfaste sur les caractéristiques mécaniques et la formabilité.

Sr : l'ajout de Sr est optionnel. A une teneur inférieure à 500 ppm, il permet d'agir sur la forme de l'eutectique Al-Si lors de la solidification, favorise l'obtention de particules de Si d'aspect circulaire et réparties de manière homogène après réchauffage et avant laminage à chaud. Au-delà, son effet sur le gazage de la plaque coulée devient significatif.
Une teneur préférentielle en strontium est de 200 à 400 ppm.
L'utilisation d'autres éléments dits « modificateurs, tels que le sodium Na à des teneurs jusqu'à 200 ppm (de préférence de 20 à 200 ppm) ou l'antimoine Sb à des teneurs jusqu'à 0,15 % (de préférence de 0,04 à 0,15 %) est également possible.
Une teneur préférentielle en Na est de 20 à 200 ppm.
Une teneur préférentielle en Sb est de 0.04 à 0.15%
Dans un mode de réalisation avantageux, l'addition de Sr seul est choisie.

Les caractéristiques mécaniques de la tôle laminée utilisée pour le procédé selon l'invention sont avantageusement les suivantes, à l'état T4 de livraison, Rp_{0,2} ≤ 160 MPa, Ag ≥ 18 %, A80 ≥ 20 %, et après écrouissage en traction de 2% suivi de 20 min à 180°C, traitement représentatif de la cuisson des peintures, Rp_{0,2} ≥ 170 MPa et préférentiellement Rp_{0,2} ≥ 190 MPa et Rm ≥ 240 MPa. De préférence la tôle laminée utilisée a une épaisseur comprise entre 0,5 mm et 3 mm et de manière préférée entre 1 et 2 mm.

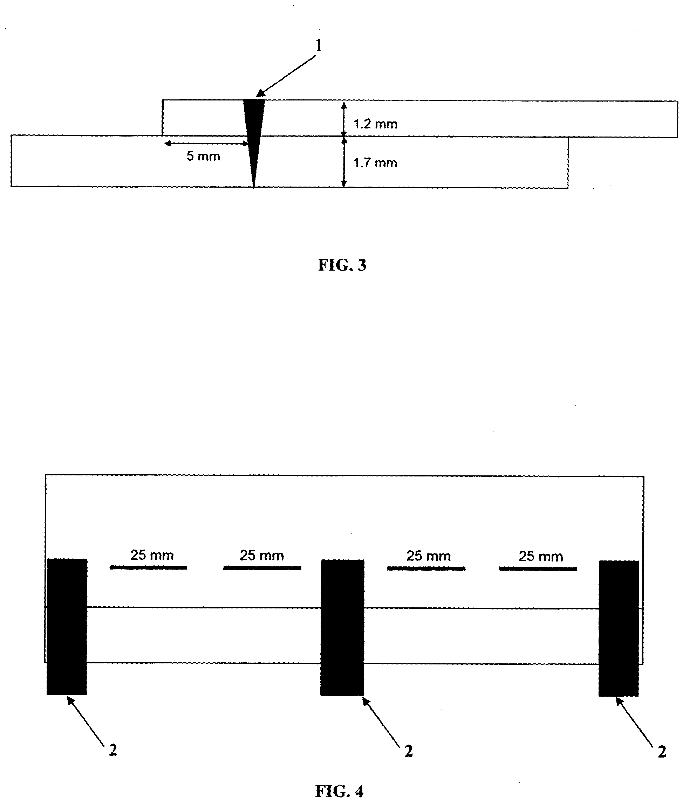

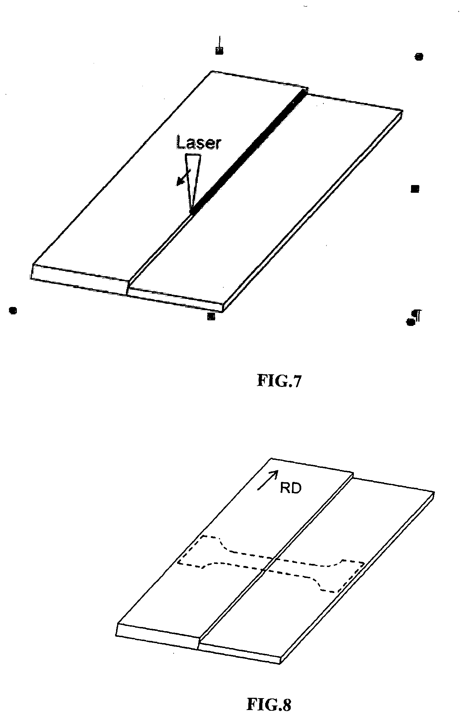

Le procédé selon l'invention peut notamment être utilisé pour du soudage par superposition, tel qu'illustré sur la figure 3 ou du soudage en configuration bout à bout tel qu'illustré par la figure 7. Il a par ailleurs été noté que la tendance à la fissuration lors du soudage était nettement moindre lorsque ladite tôle laminée de composition selon l'invention était positionnée au-dessus du ou des autres demi-produit(s) lors du soudage, soit du côté de l'impact du faisceau laser. Cet avantage est obtenu dans le cas du soudage par superposition. Ainsi dans un mode de réalisation avantageux la tôle laminée de composition selon l'invention est positionnée du côté de l'impact du faisceau laser.
Avantageusement la configuration de soudage bout à bout permet d'obtenir après soudage un flan rabouté de préférence caractérisé en ce que au moins deux des dits demi-produits ont une épaisseur différente et/ou une résistance mécanique différente. L'invention concerne également un flan rabouté constitué de plusieurs demi-produits dont l'un au moins est une tôle laminée ayant une composition selon l'invention et étant assemblé par soudage bout à bout selon un procédé de soudage sans fil d'apport selon l'invention. Les flan raboutés selon l'invention sont avantageux et présentent notamment un rapport Rm après soudage divisé par Rm à l'état T4 supérieur à 0,8, Rm après soudage étant mesuré sur des éprouvettes prélevées dans un sens perpendiculaire à la direction de laminage, tel qu'illustré sur la Figure 8.

L'avantage essentiel de l'invention est la possibilité d'utiliser une tôle laminée monolithique, présentant une soudabilité améliorée en particulier lors du soudage par laser à distance sans fil d'apport, procédé de soudage généralement connu par l'homme du métier sous l'appellation de « Remote Laser Welding », ainsi que des propriétés de formabilité et de résistance à la corrosion au moins comparables à celles des alliages de la famille AA6XXX classiquement utilisée pour les pièces d'automobile.

Les applications visées couvrent tant les pièces de structure que de caisse en blanc, de peau ou d'ouvrants.
Le procédé selon l'invention dans lequel les dits demi-produits constituent des composants de structure automobile ou des composants de caisse en blanc automobile ou des composants de peau de véhicule automobile ou des composants d'ouvrants de véhicule automobile est avantageux.

### Exemples

**Compositions chimiques testées :** elles sont récapitulées au Tableau 1 ci-après :

**Tableau 1**

| **Référence** | **Eléments d'alliage** (% en Poids) | | | | | | | | | |
|---|---|---|---|---|---|---|---|---|---|---|
| | Si | Fe | Condition A | Cu | Mn | Mg | Cr | Zn | Ti | Sr |
| 1 (Invention) | 3,44 | 0,24 | 7,7 | 0,060 | 0,10 | 0,25 | 0 | 0 | 0,02 | 0 |
| 2 (Invention) | 3,39 | 0,24 | 7,5 | 0,200 | 0,10 | 0,24 | 0 | 0 | 0,03 | 0 |
| 3 (Invention) | 3,26 | 0,18 | 7,0 | 0,020 | 0,10 | 0,25 | 0,10 | 0,032 | 0,14 | 0 |
| 4 | 3,36 | 0,15 | **6,9** | 0 | 0,10 | 0,45 | 0,10 | 0 | 0,13 | 0 |
| 5 | **1,28** | 0,14 | | 0,018 | 0,10 | 0,43 | 0,10 | 0,028 | 0,02 | 0 |
| 6 (Invention) | 3,46 | 0,26 | 7,8 | 0 | 0,10 | 0,25 | 0 | 0,032 | 0,14 | 0,03 |
| 7 | **1,27** | 0,24 | | 0 | 0,10 | 0,44 | 0,10 | 0 | 0,15 | 0 |
| 8 | **1,27** | 0,25 | | 0 | 0,10 | 0,24 | 0,10 | 0,030 | **0,01** | 0 |
| 9 | **1,30** | 0,15 | | 0,020 | 0,10 | 0,25 | 0 | 0 | 0,15 | 0 |
| 10 | 3,30 | 0,25 | | 0,020 | 0,10 | 0,25 | 0,10 | 0 | **0,01** | 0,03 |
| 11 (Invention) | 3,29 | 0,24 | 7,2 | 0,020 | 0,10 | 0,44 | 0 | 0 | 0,02 | 0 |
| 12 | 3,44 | 0,16 | | 0 | 0,10 | 0,45 | 0 | 0,033 | **0,01** | 0,03 |
| 13 | **1,27** | 0,24 | | 0,019 | 0,10 | 0,44 | 0 | 0,033 | 0,15 | 0 |
| 14 | **1,26** | 0,14 | | 0 | 0,11 | 0,24 | 0 | 0 | 0,02 | 0 |
| 15 (Invention) | 3,50 | 0,24 | 7,3 | 0 | 0,10 | 0,80 | 0 | 0,035 | 0,14 | 0,03 |
| 16 | 3,30 | 0,26 | **6,9** | 0,021 | 0,10 | 0,83 | 0,10 | 0 | 0,02 | 0,03 |
| 17 | **1,97** | 0,40 | | 0,021 | 0,10 | 0,25 | 0,10 | 0 | 0,10 | 0 |
| 18 (Invention) | 2,73 | 0,41 | 7,2 | 0,021 | 0,11 | 0,25 | 0,11 | 0 | 0,11 | 0 |
| 19 (Invention) | 3,47 | 0,40 | 8,6 | 0,021 | 0,10 | 0,25 | 0,10 | 0 | 0,24 | 0 |
| 20 (Invention) | 4,52 | 0,42 | 10,7 | 0,021 | 0,10 | 0,25 | 0,10 | 0 | 0,11 | 0 |
| 21 | 2,74 | 0,25 | **6,4** | 0,019 | 0,12 | 0,25 | 0,10 | 0 | 0,11 | 0 |
| 22 (Invention) | 2,71 | 0,59 | 8,1 | 0,024 | 0,12 | 0,24 | 0,10 | 0 | 0,11 | 0 |
| 23 (Invention) | 2,74 | 0,39 | 7,1 | 0,048 | 0,10 | 0,25 | 0,10 | 0 | 0,10 | 0 |
| 24 (Invention) | 2,78 | 0,40 | 7,2 | 0,100 | 0,10 | 0,24 | 0,10 | 0 | 0,10 | 0 |
| 25 | **1,18** | 0,16 | | 0,132 | 0,07 | 0,35 | 0,01 | 0 | **0,01** | 0 |
| 26 | **1,18** | 0,16 | | 0,128 | 0,07 | 0,35 | 0,01 | 0 | 0,03 | 0 |

On notera que les références 25 et 26 correspondent à des alliages du type AA6016 très couramment utilisés en carrosserie automobile.

**Paramètres de fabrication/Procédé :** ils sont récapitulés au Tableau 2 ci-après :

**Tableau 2**

| **Référence** | **Paramètres procédé** | | | | | | | | | | |
|---|---|---|---|---|---|---|---|---|---|---|---|
| | Température de réchauffage (°C) | temps de maintien au réchauffage (h) | Température de début de laminage à chaud (°C) | Température finale de laminage à chaud (°C) | épaisseur après laminage à chaud (mm) | épaisseur après laminage à froid (mm) | Température de mise en solution (°C) | Temps de maintien à la température de mise en solution (s) | Température en fin de trempe (°C) | Température de pré revenu (°C) | Temps de pré revenu (h) |
| **1** | **550** | **4** | **530** | **280** | **6** | **1.2/1.7** | **550** | **120** | **85** | **85** | **8** |
| **2** | **550** | **4** | **530** | **280** | **6** | **1.2/1.7** | **550** | **120** | **85** | **85** | **8** |
| **3** | **550** | **4** | **530** | **280** | **6** | **1.2/1.7** | **550** | **120** | **85** | **85** | **8** |
| 4 | 550 | 4 | 530 | 280 | 6 | 1.2/1.7 | 550 | 120 | 85 | 85 | 8 |
| 5 | 550 | 4 | 530 | 280 | 6 | 1.2/1.7 | 550 | 120 | 85 | 85 | 8 |
| 6 | 550 | 4 | 530 | 280 | 6 | 1.2/1.7 | 550 | 120 | 85 | 85 | 8 |
| 7 | 550 | 4 | 530 | 280 | 6 | 1.2/1.7 | 550 | 120 | 85 | 85 | 8 |
| 8 | 550 | 4 | 530 | 280 | 6 | 1.2/1.7 | 550 | 120 | 85 | 85 | 8 |
| 9 | 550 | 4 | 530 | 280 | 6 | 1.2/1.7 | 550 | 120 | 85 | 85 | 8 |
| 10 | 550 | 4 | 530 | 280 | 6 | 1.2/1.7 | 550 | 120 | 85 | 85 | 8 |
| **11** | **550** | **4** | **530** | **280** | **6** | **1.2/1.7** | **550** | **120** | **85** | **85** | **8** |
| 12 | 550 | 4 | 530 | 280 | 6 | 1.2/1.7 | 550 | 120 | 85 | 85 | 8 |
| 13 | 550 | 4 | 530 | 280 | 6 | 1.2/1.7 | 550 | 120 | 85 | 85 | 8 |
| 14 | 550 | 4 | 530 | 280 | 6 | 1.2/1.7 | 550 | 120 | 85 | 85 | 8 |
| **15** | **550** | **4** | **530** | **280** | **6** | **1.2/1.7** | **550** | **120** | **20** | **85** | **8** |
| 16 | 550 | 4 | 530 | 280 | 6 | 1.2/1.7 | 550 | 120 | 20 | 85 | 8 |
| 17 | 550 | 4 | 530 | 280 | 6 | 1.2/1.7 | 550 | 120 | 20 | 85 | 8 |
| **18** | **550** | **4** | **530** | **280** | **6** | **1.2/1.7** | **550** | **120** | **20** | **85** | **8** |
| **19** | **550** | **4** | **530** | **280** | **6** | **1.2/1.7** | **550** | **120** | **20** | **85** | 8 |
| **20** | **550** | **4** | **530** | **280** | **6** | **1.2/1.7** | **550** | **120** | **20** | **85** | **8** |
| **21** | **550** | **4** | **530** | **280** | **6** | **1.2/1.7** | **550** | **120** | **20** | **85** | 8 |
| **22** | **550** | **4** | **530** | **280** | **6** | **1.2/1.7** | **550** | **120** | **20** | **85** | **8** |
| **23** | **550** | **4** | **530** | **280** | **6** | **1.2/1.7** | **550** | **120** | **20** | **85** | **8** |
| **24** | **550** | **4** | **530** | **280** | **6** | **1.2/1.7** | **550** | **120** | **20** | **85** | **8** |
| 25 | 550 | 4 | 530 | 280 | 6 | 1.2/1.7 | 550 | 120 | 20 | 85 | 8 |
| 26 | 550 | 4 | 530 | 280 | 6 | 1.2/1.7 | 550 | 120 | 20 | 85 | 8 |

### Essais de soudage

Le soudage laser est effectué par recouvrement d'une tôle de 1.2 mm sur une tôle de 1.7 mm de même composition chimique, selon les schémas des figures 3 et 4.

Pour chaque alliage, 16 cordons de soudures sont réalisés.

Les paramètres de soudage laser utilisés sont les suivants :
- Puissance du laser : 3 kW
- Vitesse de soudage : 3,4 m/min
- Pas de fil d'apport
- Pas de gaz de protection

### Evaluation des fissures :

Une coupe transversale est réalisée sur chaque cordon de soudure.

Après enrobage et polissage, chacune des coupes est observée en microscopie optique afin de déterminer la taille des fissures éventuelles dans le cordon.

Une moyenne est ensuite réalisée sur les 16 coupes afin d'obtenir la fissure moyenne. Il est aussi possible de déterminer la fraction de fissures dont la longueur est supérieure à une certaine longueur.

En l'occurrence, pour chacun des alliages, la longueur moyenne des fissures, la fraction de fissures dont la longueur dépasse 0,2 fois l'épaisseur de la tôle supérieure, et la fraction de fissures dont la longueur dépasse 0,4 fois l'épaisseur de la tôle supérieure sont déterminées.

L'ensemble est récapitulé au Tableau 3 ci-après :

**Tableau 3**

| **Référence** | **Performance en soudage** | | |
|---|---|---|---|
| | Longueur moyenne de fissures (* 1.2 mm) | Fraction de fissures de longueur supérieure à 0.2^{∗}1.2mm | Fraction de fissures de longueur supérieure à 0.4^{∗}1.2mm |
| **1 (Invention)** | **0,25** | **0,44** | **0,19** |
| **2 (Invention)** | **0,19** | **0,38** | **0,13** |
| **3 (Invention)** | **0,11** | **0,25** | **0** |
| 4 | 0,46 | 0,75 | 0,56 |
| 5 | 1,00 | 1 | 1 |
| **6 (Invention)** | **0,08** | 0 | 0 |
| 7 | 0,84 | 0,94 | 0,88 |
| 8 | 0,79 | 0,88 | 0,81 |
| 9 | 0,93 | 1 | 1 |
| 10 | 0,59 | 0,94 | 0,75 |
| **11 (Invention)** | **0,42** | **0,75** | **0,38** |
| 12 | 0,64 | 1 | 0,81 |
| 13 | 0,89 | 1 | 1 |
| 14 | 0,86 | 1 | 0,88 |
| **15 (Invention)** | **0,33** | **0,56** | **0,31** |
| 16 | 0,54 | 0,88 | 0,63 |
| 17 | 0,53 | 0,75 | 0,56 |
| **18 (Invention)** | **0,29** | **0,50** | **0,25** |
| **19 (Invention)** | **0,24** | **0,69** | **0,06** |
| **20 (Invention)** | **0,06** | **0,00** | 0 |
| 21 | 0,59 | 0,81 | 0,69 |
| **22 (Invention)** | **0,14** | **0,31** | 0 |
| **23 (Invention)** | **0,44** | **0,69** | **0,50** |
| **24 (Invention)** | **0,39** | **0,69** | **0,38** |
| 25 | 0,96 | 1 | 1 |
| 26 | 1 | 1 | 1 |

En premier lieu, il convient de noter que le maintien de propriétés similaires à celles d'un alliage de la famille AA6XXX classique lors de l'ajout de Si jusqu'à une teneur de l'ordre de 5 % voire plus est a priori inconnu de l'art antérieur, aucun exemple relatant cet effet n'ayant été relevé dans la littérature par la demanderesse.

La comparaison des exemples 17, 18, 19 et 20 montre qu'en augmentant la teneur en Si de sensiblement 2 à 4,5 %, la longueur moyenne de fissure diminue de 0,53 à 0,06, et la fraction de fissure dont la longueur est supérieure à 0,2 fois l'épaisseur de la tôle supérieure lors du soudage diminue de 0,56 à 0.

Par ailleurs, au-delà d'une teneur de 1,2 %, des particules de Si diamant se forment dans la microstructure, pouvant mesurer jusqu'à 10 µm. Aucun résultat de la littérature ne montre de propriétés avec de telles compositions chimiques et une telle microstructure.

D'autre-part, cet effet du fer sur la soudabilité constitue une autre différence avec l'art antérieur : la comparaison des exemples 21, 18 et 22 notamment montre l'effet intéressant du Fe. En effet avec une teneur en Si limitée (2,7 %) il est possible d'améliorer la soudabilité en passant d'une teneur en Fe de 0,25 % à 0,59 % : la longueur moyenne de fissure diminue de 0,59 à 0,14, et la fraction de fissure dont la longueur est supérieure à 0,4 fois l'épaisseur de la tôle supérieure lors du soudage diminue de 0,69 à 0 en passant par 0,25.

A cet effet, aucune référence bibliographique ne permet de trouver une explication et même la preuve d'une influence positive du fer sur la réduction de la sensibilité à la fissuration.

De même les exemples 21, 22 et 23, comparés notamment aux exemples 4, 16,et 21, témoignent de l'effet très positif sur le soudage de la condition A.

Enfin la comparaison des résultats au tableau 3 de l'exemple 19 comparé aux exemples 23 et 24 montre l'effet négatif du cuivre.

### Essais de traction

Les essais de traction à température ambiante ont été réalisés selon la norme NF EN ISO 6892-1 avec des éprouvettes non proportionnelles de géométrie largement utilisée pour les tôles et correspondant au type d'éprouvette 2 du tableau B.1 de l'annexe B de la norme. Ces éprouvettes possèdent notamment une largeur de 20 mm et une longueur calibrée de 120 mm. L'allongement pour cent après rupture est mesuré à l'aide d'un extensomètre de base 80 mm et est donc noté Aso conformément à la norme.

Comme mentionné dans la note du paragraphe 20.3 de la norme ISO 6892-1 :2009(F) (page 19), il est important de noter que « des comparaisons d'allongement pour cent sont possibles uniquement lorsque la longueur entre repères ou la longueur de base de l'extensomètre, la forme et l'aire de la section transversale sont les mêmes ou lorsque le coefficient de proportionnalité, k, est le même. »

Notamment, il n'est pas possible de directement comparer des valeurs d'allongements pour cent A₅₀ mesurées avec une base d'extensomètre de 50 mm à des valeurs d'allongement pour cent A₈₀ mesurées avec une base d'extensomètre de 80 mm. Dans le cas particulier d'une éprouvette de même géométrie prise dans une même matière, la valeur d'allongement pour cent A₅₀ sera plus élevée que la valeur d'allongement pour cent Aso et donnée par la relation : A₅₀= Ag + (A₈₀ - Ag)^{∗}80/50 où Ag, en %, est l'extension plastique à la force maximale, aussi appelé « allongement généralisé » ou « allongement à striction ».

Les résultats sont récapitulés au Tableau 4 ci-après :

**Tableau 4**

| **Référence** | **Caractéristiques mécaniques** | | | | | | | |
|---|---|---|---|---|---|---|---|---|
| | **T4** | | | | **T4 + Cuisson Peintures** | | | |
| | **Rp_{0,2} (MPa)** | **Rm (MPa)** | **Ag (%)** | **A80 (%)** | **Rp_{0,2} (MPa)** | **Rm (MPa)** | **Ag (%)** | **A80 (%)** |
| **1 (Invention)** | **98** | **204** | **18,0** | **20,5** | **192** | **247** | **8,8** | **10,0** |
| **2 (Invention)** | **87** | **206** | **21,3** | **27,0** | **205** | **263** | **8,6** | **8,6** |
| **3 (Invention)** | **110** | **228** | **20,2** | **23,0** | **190** | **261** | **14,3** | **17,4** |
| 4 | 134 | 277 | 20,7 | 24,6 | 263 | 328 | 13,9 | 17,5 |
| 5 | 133 | 274 | 23,6 | 28,7 | 260 | 322 | 15,0 | 19,0 |
| **6 (Invention)** | **90** | **196** | **18,9** | **20,5** | **199** | **268** | **13,4** | **15,7** |
| 7 | 128 | 230 | 21,3 | 22,6 | 264 | 326 | 14,3 | 16,7 |
| 8 | 106 | 221 | 20,3 | 23,9 | 188 | 258 | 13,5 | 15,6 |
| 9 | 102 | 219 | 22,3 | 25,7 | 195 | 261 | 14,0 | 15,7 |
| 10 | 96 | 202 | 21,0 | 24,9 | 195 | 261 | 12,0 | 14,8 |
| **11 (Invention)** | **130** | **271** | **20,6** | **24,7** | **245** | **272** | **3,4** | **3,5** |
| 12 | | | | | 248 | 281 | 4,9 | 5,0 |
| 13 | 140 | 277 | 22,1 | 26,7 | 259 | 320 | 13,7 | 15,4 |
| 14 | 77 | 173 | 24,0 | 26,7 | 192 | 245 | 9,6 | 10,7 |
| **15 (Invention)** | **156** | **299** | **19,8** | **23,0** | **272** | **331** | **10,2** | **11,2** |
| 16 | 183 | 287 | 19,6 | 22,7 | 299 | 358 | 12,4 | 13,7 |
| 17 | 111 | 238 | 21,7 | 23,9 | 205 | 278 | 14,1 | 16,6 |
| **18 (Invention)** | **111** | **238** | **21,7** | **24,1** | **204** | **276** | **14,3** | **17,4** |
| **19 (Invention)** | **111** | **237** | **21,7** | **25,1** | **204** | **277** | **13,2** | **15,7** |
| **20 (Invention)** | **110** | **237** | **22,0** | **25,3** | **199** | **272** | **14,8** | **19,9** |
| 21 | 108 | 234 | 23,3 | 26,4 | 199 | 273 | 16,1 | 19,9 |
| **22 (Invention)** | **112** | **240** | **20,3** | **22,5** | **207** | **280** | **12,9** | **15,4** |
| **23 (Invention)** | **111** | **240** | **21,8** | **24,5** | **206** | **277** | **14,1** | **17,0** |
| **24 (Invention)** | **112** | **241** | **20,6** | **22,8** | **210** | **282** | **13,8** | **16,5** |
| 25 | 116 | 243 | 25,7 | 28,1 | 229 | 297 | 16,3 | 20,6 |
| 26 | 115 | 242 | 25,1 | 27,8 | 222 | 292 | 17,1 | 21,3 |

On note que l'amélioration de la qualité du soudage notamment pour les exemples 3, 6, et surtout 20 et 22, est réalisée sans altération notable des conditions de caractéristiques mécaniques requises au paragraphe « Problème posé ».

### Mesure du LDH (Limit Dome Height)

Ces mesures de LDH (Limit Dome Height) ont été réalisées afin de caractériser la performance en emboutissage des différentes tôles de cet exemple.

Le paramètre LDH est largement utilisé pour l'évaluation de l'aptitude à l'emboutissage des tôles d'épaisseur de 0,5 à 3,0 mm. Il a fait l'objet de nombreuses publications, notamment celle de R. Thompson, « The LDH test to evaluate sheet métal formability - Final Report of the LDH Committee of the North American Deep Drawing Research Group », SAE conference, Détroit, 1993, SAE Paper n°930815. Il s'agit d'un essai d'emboutissage d'un flan bloqué en périphérie par un jonc. La pression de serre-flan est contrôlée pour éviter un glissement dans le jonc. Le flan, de dimensions 120 x 160 mm, est sollicité dans un mode proche de la déformation plane. Le poinçon utilisé est hémisphérique.

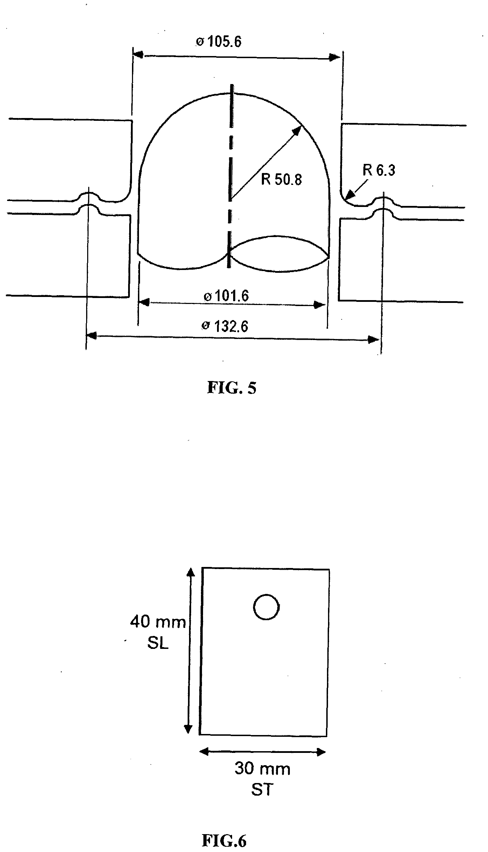

La figure 5 précise les dimensions des outils utilisés pour réaliser ce test.

La lubrification entre le poinçon et la tôle est assurée par de la graisse graphitée (graisse Shell HDM2). La vitesse de descente du poinçon est de 50 mm/min. La valeur dite LDH est la valeur du déplacement du poinçon à rupture, soit la profondeur limite de l'emboutissage. Elle correspond en fait à la moyenne de trois essais, donnant un intervalle de confiance à 95 % sur la mesure de 0,2 mm.

Le tableau 5 ci-après indique les valeurs du paramètre LDH obtenues sur des éprouvettes de 120 x 160 mm découpées dans les tôles précitées d'épaisseur 2,5 mm et pour lesquelles la dimension de 160 mm était positionnée parallèlement à la direction de laminage.

**Tableau 5**

| **Référence** | **Formabilité** |
|---|---|
| | LDH120 (mm) |
| **1 (Invention)** | **24,5** |
| **2 (Invention)** | **23,9** |
| **3 (Invention)** | **24,3** |
| 4 | |
| 5 | |
| **6 (Invention)** | **23,4** |
| 7 | |
| 8 | 22,4 |
| 9 | 21,8 |
| 10 | |
| **11 (Invention)** | |
| 12 | |
| 13 | 24,5 |
| 14 | |
| **15 (Invention)** | |
| 16 | |
| 17 | 26,6 |
| **18 (Invention)** | **26,3** |
| **19 (Invention)** | **26,3** |
| **20 (Invention)** | **26,0** |
| 21 | 26,8 |
| **22 (Invention)** | **26,1** |
| **23 (Invention)** | **26,3** |
| **24 (Invention)** | **26,4** |
| 25 | 27,1 |
| 26 | 27,3 |

On note que l'amélioration de la qualité du soudage notamment pour les exemples 3, 6, 20 et 22, est réalisée sans altération notable de la formabilité traduite par la valeur du « LDH ».

On rappelle également que les références 25 et 26 correspondent à des alliages du type AA6016 très couramment utilisés en carrosserie automobile.

### Evaluation de la résistance à la corrosion

L'essai de corrosion inter granulaire selon la norme ISO 11846 consiste à immerger les éprouvettes selon la figure 6 pendant 24 h dans une solution de chlorure de sodium (30 g/l) et d'acide chlorhydrique (10 ml/l) à une température de 30°C (obtenue au moyen d'un maintien en étuve sèche), après un décapage à la soude à chaud (5 % massique) et à l'acide nitrique (70 % massique) à température ambiante. Les échantillons ont une dimension de 40 mm (sens de laminage) x 30 mm x épaisseur.

Le type et la profondeur de la corrosion occasionnée sont déterminés par un examen en coupe micrographique du métal. On mesure la profondeur de corrosion médiane et maximum sur chaque échantillon.

Les résultats sont récapitulés au Tableau 6 ci-après.

**Tableau 6**

| **Référence** | **Corrosion inter granulaire** | |
|---|---|---|
| | Profondeur médiane corrodée (µm) | Profondeur maximale corrodée (µm) |
| **1 (Invention)** | **126** | **198** |
| **2 (Invention)** | **141** | **164** |
| **3 (Invention)** | **89** | **146** |
| 4 | 5 | 15 |
| 5 | | |
| **6 (Invention)** | **110** | **192** |
| 7 | | |
| 8 | 34 | 42 |
| 9 | 13 | 27 |
| 10 | 89 | 110 |
| **11 (Invention)** | **80** | **137** |
| 12 | | |
| 13 | | |
| 14 | | |
| **15 (Invention)** | | |
| 16 | 61 | 91 |
| 17 | 32 | 65 |
| **18 (Invention)** | **36** | **78** |
| **19 (Invention)** | **40** | **72** |
| **20 (Invention)** | **30** | **67** |
| 21 | 23 | 42 |
| **22 (Invention)** | **55** | **76** |
| **23 (Invention)** | **48** | **72** |
| **24 (Invention)** | **76** | **101** |
| 25 | 75 | 138 |
| 26 | 115 | 174 |

On note de nouveau que l'amélioration de la qualité du soudage notamment pour les exemples 1, 2, 3 et 6, et surtout 18, 19 et 20, ainsi que 22, 23 et 24, est réalisée sans altération notable de la résistance à la corrosion.

### Essais de soudage bout-à-bout

Des essais de soudage bout-à-bout pour obtenir des flans raboutés ont été réalisés selon le schéma de la Figure 7. Une tôle d'épaisseur 1.2 mm et une tôle d'épaisseur 1.7 mm ont été utilisées. On a testé un assemblage en alliage 20 selon l'invention et un assemblage en alliage 26 de référence.

Les paramètres de soudage laser utilisés sont les suivants :
- Puissance du laser : 3 kW
- Vitesse de soudage : 3,4 m/min
- Pas de fil d'apport
- Pas de gaz de protection

Des échantillons ont été prélevés selon la figure 8 pour réaliser des essais de traction. RD indique la direction de laminage.

Les propriétés mécaniques obtenues sont données dans le tableau 7

**Tableau 7**

| **Référence** | **Caractéristiques mécaniques** | | | | | | |
|---|---|---|---|---|---|---|---|
| | **T4** | | | | **Assemblage soudé** | | |
| | **Rp_{0,2} (MPa)** | **Rm (MPa)** | **Ag (%)** | **A80 (%)** | **Rm (MPa)** | **A (100%)** | **Rm après soudage / Rm T4** |
| **20 (Invention)** | **110** | **237** | **22,0** | **25,3** | **206** | **2,6** | **0,87** |
| 26 | 115 | 242 | 25,1 | 27,8 | 162 | 0,5 | 0,67 |

L'assemblage en alliage selon l'invention présente une performance en soudage évaluée par le rapport entre Rm après soudage et Rm T4 supérieur à 0,8, 30% plus élevé que l'alliage de référence. De plus, l'allongement total de l'assemblage soudé augmente de 0,5 % à 2,6 % pour le produit selon l'invention.

## Revendications

1. Procédé de soudage de demi-produits monolithiques en alliage d'aluminium par laser sans fil d'apport, comportant les étapes suivantes :
- Approvisionnement d'au moins deux demi-produits monolithiques en alliage d'aluminium dont l'un au moins est une tôle laminée de composition (% en poids) :
Si: 2,5-14
Fe : 0,05-0,80
Cu : ≤ 0,20
Mg : 0,05-0,80
Mn : ≤ 0,70
Cr : ≤ 0,35
Ti : 0,02-0,30
Sr jusqu'à 500 ppm
Na jusqu'à 200 ppm
Sb jusqu'à 0,15 %,
autres éléments < 0,05 chacun et < 0,15 au total, reste aluminium,
avec la condition : 5.2 Fe + 1.95 Si - 0.5 Cu - Mg ≥ 7,0
- Soudage des demi-produits en alliage d'aluminium par laser sans fil d'apport.

2. Procédé selon la revendication 1, **caractérisé en ce que** ladite tôle présente à l'état T4 de livraison les propriétés mécaniques, Rp_{0,2} ≤ 160 MPa, Ag ≥ 18 %, A80 ≥ 20 %.

3. Procédé selon la revendication 1 ou la revendication 2 **caractérisé en ce que** ladite tôle présente après écrouissage en traction de 2% suivi de 20 min à 180°C, traitement représentatif de la cuisson des peintures, Rp_{0,2} ≥ 170 MPa et Rm ≥ 240. MPa.

4. Procédé selon l'une des revendications 1 à 3 **caractérisé en ce que** la teneur en Mg est comprise entre 0,20 et 0,80 %. et de préférence entre 0,20 et 0,40 %.

5. Procédé selon l'une des revendications 1 à 4 **caractérisé en ce que** la teneur en Si est comprise entre 2,5-10,0 de préférence 2,7 et 5,0 %.

6. Procédé selon l'une des revendications 1 à 5 **caractérisé en ce que** la teneur en Sr est comprise entre 200 et 400 ppm et / ou la teneur en Na est comprise entre 20 et 200 ppm et /ou la teneur en Sb est comprise entre 0,04 et 0,15 %.

7. Procédé selon l'une des revendications 1 à 6 **caractérisé en ce que** la teneur en Fe est comprise entre 0,15 et 0,60 %.

8. Procédé selon l'une des revendications 1 à 7 **caractérisé en ce que** Cu ≤ 0,10 %, préférentiellement Cu ≤ 0,05 %, plus préférentiellement Cu ≤ 200 ppm et encore plus préférentiellement Cu ≤ 100 ppm.

9. Procédé selon une quelconque des revendications 1 à 8, **caractérisé en ce que** la dite tôle laminée est positionnée du côté de l'impact du faisceau laser lors du soudage.

10. Procédé selon une quelconque des revendications 1 à 8, **caractérisé en ce que** ledit soudage des demi-produits en alliage d'aluminium par laser sans fil d'apport est réalisé dans une configuration bout à bout.

11. Procédé selon la revendication 10 **caractérisé en ce que** le produit obtenu après soudage est un flan rabouté **caractérisé en ce que** au moins deux des dits demi-produits ont une épaisseur différente et/ou une résistance mécanique différente.

12. Procédé selon l'une des revendications 1 à 11 **caractérisé en ce que** les dits demi-produits constituent des composants de structure automobile ou des composants de caisse en blanc automobile ou des composants de peau de véhicule automobile ou des composants d'ouvrants de véhicule automobile.

13. Composant de structure, de caisse en blanc, de peau ou d'ouvrant de véhicule automobile, constitué de plusieurs demi-produits dont l'un au moins est une tôle laminée de composition (% en poids) :
Si: 2,5-14
Fe : 0,05-0,80
Cu : < 0,20
Mg : 0,05-0,80
Mn : < 0,70
Cr : < 0,35
Ti : 0,02-0,30
Sr jusqu'à 500 ppm
Na jusqu'à 200 ppm
Sb jusqu'à 0,15 %,
autres éléments < 0,05 chacun et < 0,15 au total, reste aluminium,
avec la condition : 5.2 Fe + 1.95 Si - 0.5 Cu - Mg > 7,0 et est assemblé à au moins l'un des autres demi-produits par soudage laser sans fil d'apport selon un procédé selon l'une des revendications 1 à 12.

14. Flan rabouté constitué de plusieurs demi-produits dont l'un au moins est une tôle laminée de composition (% en poids) :
Si: 2,5-14
Fe : 0,05-0,80
Cu : < 0,20
Mg : 0,05-0,80
Mn : < 0,70
Cr : < 0,35
Ti : 0,02-0,30
Sr jusqu'à 500 ppm
Na jusqu'à 200 ppm
Sb jusqu'à 0,15 %,
autres éléments < 0,05 chacun et < 0,15 au total, reste aluminium,
avec la condition : 5.2 Fe + 1.95 Si - 0.5 Cu - Mg > 7,0 et est assemblé à au moins l'un des autres demi-produits par soudage laser sans fil d'apport dans une configuration bout à bout selon un procédé selon la revendication 10.

15. Flan rabouté selon la revendication 14 **caractérisé en ce qu'**au moins deux des dits demi-produits ont une épaisseur différente et/ou une résistance mécanique différente.

## Patentansprüche

1. Verfahren zum Laserschweißen von monolithischen Halbzeugen aus Aluminiumlegierung ohne Schweißdraht, das die folgenden Schritte umfasst:
- Bereitstellen von mindestens zwei monolithischen Halbzeugen aus Aluminiumlegierung, von denen mindestens eins ein gewalztes Blech ist mit der Zusammensetzung (Gew.-%):
Si: 2,5-14
Fe: 0,05-0,80
Cu: ≤ 0,20
Mg: 0,05-0,80
Mn: ≤ 0,70
Cr: ≤ 0,35
Ti: 0,02-0,30
Sr bis zu 500 ppm
Na bis zu 200 ppm
Sb bis zu 0,15 %,
weitere Elemente jeweils < 0,05 und insgesamt < 0,15, Rest Aluminium,
mit der Maßgabe: 5,2 Fe + 1,95 Si - 0,5 Cu - Mg ≥ 7,0
- Laserschweißen der Halbzeuge aus Aluminiumlegierung ohne Schweißdraht.

2. Verfahren nach Anspruch 1, **dadurch gekennzeichnet, dass** das Blech im Lieferzustand T4 die mechanischen Eigenschaften Rp_{0,2}≤160 MPa, Ag≥18 %, A80 ≥ 20 % aufweist.

3. Verfahren nach Anspruch 1 oder Anspruch 2, **dadurch gekennzeichnet, dass** das Blech nach Kaltumformung unter Zugbeanspruchung von 2 %, gefolgt von 20 min bei 180 °C, was einer für das Einbrennen der Lacke repräsentativen Behandlung entspricht, Rp_{0,2}≥170 MPa und Rm≥240 MPa aufweist.

4. Verfahren nach einem der Ansprüche 1 bis 3, **dadurch gekennzeichnet, dass** der Gehalt an Mg zwischen 0,20 und 0,80 % liegt, vorzugsweise zwischen 0,20 und 0,40 %.

5. Verfahren nach einem der Ansprüche 1 bis 4, **dadurch gekennzeichnet, dass** der Gehalt an Si zwischen 2,5 und 10,0 % liegt, vorzugsweise zwischen 2,7 und 5,0 %.

6. Verfahren nach einem der Ansprüche 1 bis 5, **dadurch gekennzeichnet, dass** der Gehalt an Sr zwischen 200 und 400 ppm und/oder der Gehalt an Na zwischen 20 und 200 ppm und/oder der Gehalt an Sb zwischen 0,04 und 0,15 % liegt.

7. Verfahren nach einem der Ansprüche 1 bis 6, **dadurch gekennzeichnet, dass** der Gehalt an Fe zwischen 0,15 und 0,60 % liegt.

8. Verfahren nach einem der Ansprüche 1 bis 7, **dadurch gekennzeichnet, dass** Cu ≤ 0,10 %, vorzugsweise Cu ≤ 0,05 %, besonders bevorzugt Cu ≤ 200 ppm und noch bevorzugter Cu ≤ 100 ppm.

9. Verfahren nach irgendeinem der Ansprüche 1 bis 8, **dadurch gekennzeichnet, dass** das gewalzte Blech beim Schweißen auf der Auftreffseite des Laserstrahls angeordnet wird.

10. Verfahren nach irgendeinem der Ansprüche 1 bis 8, **dadurch gekennzeichnet, dass** das Laserschweißen der Halbzeuge aus Aluminiumlegierung ohne Schweißdraht in einer Stumpfstoßkonfiguration durchgeführt wird.

11. Verfahren nach Anspruch 10, **dadurch gekennzeichnet, dass** das nach dem Schweißen erhaltene Produkt eine Blechplatine ist, **dadurch gekennzeichnet, dass** mindestens zwei der Halbzeuge verschiedene Dicken und/oder verschiedene mechanische Festigkeiten aufweisen.

12. Verfahren nach einem der Ansprüche 1 bis 11, **dadurch gekennzeichnet, dass** die Halbzeuge Kfz-Strukturbauteile oder Kfz-Karosseriebauteile oder Kfz-Außenhautbauteile oder Kfz-Öffnungsvorrichtungsbauteile bilden.

13. Struktur-, Karosserie-, Außenhaut- oder Öffnungsvorrichtungsbauteil eines Kraftfahrzeugs, bestehend aus mehreren Halbzeugen, von denen mindestens eins ein gewalztes Blech ist mit der Zusammensetzung (Gew.-%):
Si: 2,5-14
Fe: 0,05-0,80
Cu: < 0,20
Mg: 0,05-0,80
Mn: < 0,70
Cr: < 0,35
Ti: 0,02-0,30
Sr bis zu 500 ppm
Na bis zu 200 ppm
Sb bis zu 0,15 %,
weitere Elemente jeweils <0,05 und insgesamt <0,15, Rest Aluminium,
mit der Maßgabe: 5,2 Fe + 1,95 Si - 0,5 Cu - Mg > 7,0, und mit mindestens einem der anderen Halbzeuge durch Laserschweißen ohne Schweißdraht gemäß einem Verfahren nach einem der Ansprüche 1 bis 12 verbunden ist.

14. Blechplatine bestehend aus mehreren Halbzeugen, von denen mindestens eins ein gewalztes Blech ist mit der Zusammensetzung (Gew.-%):
Si: 2,5-14
Fe: 0,05-0,80
Cu: ≤ 0,20
Mg: 0,05-0,80
Mn: ≤ 0,70
Cr: ≤ 0,35
Ti: 0,02-0,30
Sr bis zu 500 ppm
Na bis zu 200 ppm
Sb bis zu 0,15 %,
weitere Elemente jeweils <0,05 und insgesamt <0,15, Rest Aluminium,
mit der Maßgabe: 5,2 Fe + 1,95 Si - 0,5 Cu - Mg ≥ 7,0, und mit mindestens einem der anderen Halbzeuge durch Laserschweißen ohne Schweißdraht in einer Stumpfstoßkonfiguration gemäß einem Verfahren nach Anspruch 10 verbunden ist.

15. Blechplatine nach Anspruch 14, **dadurch gekennzeichnet, dass** mindestens zwei der Halbzeuge verschiedene Dicken und/oder verschiedene mechanische Festigkeiten aufweisen.

## Claims

1. Method for laser welding of monolithic semifinished products made from aluminium alloy, without filler wire, comprising the following steps:
- Supply of at least two monolithic semifinished products made from aluminium alloy, at least one of which is a rolled sheet having the composition (% by weight):
Si: 2.5-14
Fe: 0.05-0.80
Cu: ≤ 0.20
Mg: 0.05-0.80
Mn: ≤ 0.70
Cr: ≤ 0.35
Ti: 0.02-0.30
Sr up to 500ppm
Na up to 200ppm
Sb up to 0.15%,
other elements < 0.05 each and < 0.15 in total, the rest aluminium,
with the condition: 5.2 Fe + 1.95 Si - 0.5 Cu - Mg ≥ 7.0
- Laser welding of the semifinished products made from aluminium alloy, without filler wire.

2. Method according to claim 1, **characterised in that** said sheet has, in the state T4 of delivery, the mechanical properties, Rp_{0.2} ≤ 160MPa, Ag ≥ 18%, A80 ≥ 20%.

3. Method according to claim 1 or claim 2, **characterised in that** said sheet has, after strain hardening of 2% followed by 20min at 180°C, a treatment representative of paint bake, Rp_{0.2} ≥ 170MPa and Rm ≥ 240MPa.

4. Method according to one of claims 1 to 3, **characterised in that** the Mg content is between 0.20 and 0.80%. and preferably between 0.20 and 0.40%.

5. Method according to one of claims 1 to 4, **characterised in that** the Si content is between 2.5-10.0 preferably 2.7 and 5.0%.

6. Method according to one of claims 1 to 5, **characterised in that** the Sr content is between 200 and 400ppm and / or the Na content is between 20 and 200ppm and /or the Sb content is between 0.04 and 0.15%.

7. Method according to one of claims 1 to 6, **characterised in that** the Fe content is between 0.15 and 0.60%.

8. Method according to one of claims 1 to 7, **characterised in that** Cu ≤ 0.10%, preferably Cu ≤ 0.05%, more preferably Cu ≤ 200ppm and even more preferably Cu ≤ 100ppm.

9. Method according to any one of claims 1 to 8, **characterised in that** said rolled sheet is positioned on the side of the impact of the laser beam during the welding.

10. Method according to any one of claims 1 to 8, **characterised in that** said laser welding of semifinished products made from aluminium alloy, without filler wire, is carried out in a butt-welding configuration.

11. Method according to claim 10, **characterised in that** the product obtained after welding is a spliced blank **characterised in that** at least two of said semifinished products have a different thickness and/or a different mechanical strength.

12. Method according to one of claims 1 to 11, **characterised in that** said semifinished products form motor-vehicle structural components or motor-vehicle body in white components or skin components of a motor vehicle or components of doors of a motor vehicle.

13. Structural, body in white, skin or door component of a motor vehicle, consisting of a plurality of semifinished products, at least one of which is a rolled sheet having the composition (% by weight):
Si: 2.5-14
Fe: 0.05-0.80
Cu: < 0.20
Mg: 0.05-0.80
Mn: < 0.70
Cr: < 0.35
Ti: 0.02-0.30
Sr up to 500ppm
Na up to 200ppm
Sb up to 0.15%,
other elements < 0.05 each and < 0.15 in total, the rest aluminium,
with the condition: 5.2 Fe + 1.95 Si - 0.5 Cu - Mg ≥ 7.0 and is assembled to at least one of the other semifinished products by laser welding without filler wire according to a method according to one of claims 1 to 12.

14. Spliced blank consisting of a plurality of semifinished products, at least one of which is a rolled sheet having the composition (% by weight):
Si: 2.5-14
Fe: 0.05-0.80
Cu: < 0.20
Mg: 0.05-0.80
Mn: < 0.70
Cr: < 0.35
Ti: 0.02-0.30
Sr up to 500ppm
Na up to 200ppm
Sb up to 0.15%,
other elements < 0.05 each and < 0.15 in total, the rest aluminium,
with the condition: 5.2 Fe + 1.95 Si - 0.5 Cu - Mg ≥ 7.0 and is assembled to at least one of the other semifinished products by laser welding without filler wire in a butt-welding configuration according to a method according to claim 10.

15. Spliced blank according to claim 14, **characterised in that** at least two of said semifinished products have a different thickness and/or a different mechanical strength.
